# EUROPEAN PATENT APPLICATION

(11) **EP 4 621 282 A1**
(43) Date of publication of application: **24.09.2025**
(21) Application number: 23890694.5
(22) Date of filing: 10.11.2023
(51) Int. Cl.: F21K 9/20, F21V 5/04, G03B 21/20

(54) **LIGHT SOURCE AND COLLIMATING LENS INTEGRATED DEVICE, LIGHTING DEVICE AND PROJECTION APPARATUS**

(30) Priority: 17.11.2022 CN 202211443003
(71) Applicant: Shenzhen Roborock Innovation Technology Co., Ltd., Shenzhen, Guangdong 518000 (CN); Beijing Roborock Technology Co., Ltd., Beijing 102206 (CN)
(72) Inventor: ZHI, Shuai, Shenzhen, Guangdong 518000 (CN); ZHANG, Wei, Shenzhen, Guangdong 518000 (CN)
(74) Representative: Potter Clarkson
(86) International application number: PCT/CN2023/130932
(87) International publication number: WO 2024/104260

(57) **Abstract**

A light source and collimating lens integrated device, a lighting device and a projection apparatus. The light source and collimating lens integrated device comprises a shell (3); and a support (2) arranged in the shell (3), wherein the support (2) has a cavity; a first mounting part and a second mounting part are formed on an inner wall thereof, are coaxially arranged, and are machined to form a rotation body contour; a first collimating lens (4) is snap-fitted to the first mounting part; a second collimating lens (5) is snap-fitted to the second mounting part; and a light source chip (1) is arranged at one end of the support (2), and light emitted by the light source chip is output after passing through the first collimating lens (4) and the second collimating lens (5). A machining process is used to treat the support (2) to form a mounting station which corresponds to the collimating lenses (4, 5) and has the rotation body contour, so as to achieve hole-axis matching between the support (2) and the collimating lenses (4, 5), namely, the axis of a hole of a rotation body of the support (2) coincides with the axis of the collimating lenses (4, 5), thereby effectively eliminating the accumulative tolerance of assembly of the collimating lenses (4, 5), and improving the coaxiality between the collimating lenses (4, 5).

## Description

The present application claims priority to Chinese Patent Application No. 202211443003.3, filed to China National Intellectual Property Administration (CNIPA) on November 17, 2022 and entitled "LIGHT SOURCE AND COLLIMATING LENS INTEGRATED APPARATUS, ILLUMINATION APPARATUS AND PROJECTION DEVICE", the entire content of which is incorporated herein by reference.

### TECHNICAL FIELD

The present disclosure relates to the field of electronic device technologies, in particular to a light source and collimating lens integrated apparatus, an illumination apparatus and a projection device.

### BACKGROUND

An illumination part of a projection device is often provided with a plurality of LED light sources, which need to be collimated before use due to divergent angles. A plurality of (e.g., two) collimating lenses are required to realize the collimation, and then the collimating lenses are fixedly placed on a housing. At the same time, a light source chip is first placed on a light source bracket, and then the light source bracket is fixed to the housing.

However, slots for mounting the collimating lenses on the existing housing are manufactured by injection molding, but a processing precision of the injection molding process is limited, and surfaces of the formed slots are rough. Therefore, it is difficult to control the coaxiality and surface roughness of the slots, leading to poor coaxiality between the collimating lenses or difficulty in accurately locating an assembling posture of the collimating lenses. In addition, the housing made of a plastic material has a poor heat-conductive effect, which easily leads to the problem of thermal defocusing of the collimating lenses, affects a collimating effect and thus affects use experience of a user.

Therefore, how to solve the above problems has become an urgent technical problem for those skilled in the art.

### SUMMARY

An objective of the present disclosure is to provide a light source and collimating lens integrated apparatus, an illumination apparatus and a projection device.

In order to solve the above problems, according to a first aspect of the present disclosure, the present disclosure provides a light source and collimating lens integrated apparatus. The light source and collimating lens integrated apparatus includes a housing;
a bracket disposed in the housing; the bracket having a cavity, and a first mounting part and a second mounting part being sequentially formed on an inner wall of the cavity, wherein the first mounting part and the second mounting part are coaxially disposed, and the first mounting part and the second mounting part are manufactured by a machining process to form revolving body-shaped outlines;
a first collimating lens clamped to the first mounting part;
a second collimating lens clamped to the second mounting part; and
a light source chip disposed at one end of the bracket, light emitted by the light source chip being output after passing through the first collimating lens and the second collimating lens.

In some embodiments, the light source and collimating lens integrated apparatus further includes: a heat-dissipating member disposed on a side of a substrate of the light source chip; the heat-dissipating member being configured to dissipate heat of the bracket and the light source chip; and
a heat-conductive member disposed in a gap between the heat-dissipating member and the light source chip.

In some embodiments, the bracket is made of a metal material, and a side of the bracket is attached to the heat-dissipating member.

In some embodiments, the heat-conductive member includes a first heat-conductive layer, a second heat-conductive layer and a third heat-conductive layer disposed between the first heat-conductive layer and the second heat-conductive layer, wherein
the first heat-conductive layer is disposed between the substrate of the light source chip and the third heat-conductive layer, and the second heat-conductive layer is disposed between the third heat-conductive layer and the heat-dissipating member; materials of the first heat-conductive layer and the second heat-conductive layer include heat-conductive silica gel or heat-conductive silicone grease; and a material of the third heat-conductive layer includes a metal material.

In some embodiments, the heat-conductive member is copper foil, and protrusion structures are formed on a surface of the heat-conductive member; or protrusion structures are formed on a surface of the third heat-conductive layer.

In some embodiments, the light source and collimating lens integrated apparatus further includes: a fixing member for fixing the second collimating lens to the second mounting part.

In some embodiments, the fixing member is a pressing plate, and threads are formed on the fixing member, wherein the second mounting part has threads corresponding to the threads of the pressing plate, and the second collimating lens is fixed through threaded connection between the pressing plate and the second mounting part.

In some embodiments, the fixing member is a pressing plate, and the second collimating lens is fixed through glue connection between the fixing member and the second mounting part.

In some embodiments, the housing is made of a metal material, and the housing is provided with mounting holes matched with the bracket for assembling, wherein the mounting holes and an outer outline of the bracket are manufactured by a machining process.

According to a second aspect of the present disclosure, the present disclosure provides an illumination apparatus including the above light source and collimating lens integrated apparatus.

According to a third aspect of the present disclosure, the present disclosure provides a projection device including the above illumination apparatus.

The above technical solutions of the present disclosure have the following beneficial technical effects.

The light source and collimating lens integrated apparatus based on the embodiments of the present disclosure includes a housing; a bracket disposed in the housing, the bracket having a cavity, and a first mounting part and a second mounting part being sequentially formed on an inner wall of the cavity, wherein the first mounting part and the second mounting part are coaxially disposed, and the first mounting part and the second mounting part are manufactured by a machining process to form revolving body-shaped outlines; a first collimating lens clamped to the first mounting part; a second collimating lens clamped to the second mounting part; and a light source chip disposed at one end of the bracket, light emitted by the light source chip being output after passing through the first collimating lens and the second collimating lens. In this application, based on sizes of the first collimating lens and the second collimating lens, the machining process is used to process the bracket to form mounting working stations having the revolving body-shaped outlines and corresponding to the collimating lenses, so as to realize hole-axis cooperation between the bracket and the collimating lenses. That is, the axes of holes on the revolving bodies of the bracket coincide with axes of the collimating lenses, thereby effectively eliminating an accumulated assembling tolerance of the collimating lenses and improving the coaxiality between the collimating lenses. At the same time, the machining process can significantly reduce the manufacturing cost of the bracket.

### BRIEF DESCRIPTION OF THE DRAWINGS

FIG. 1 is a structural diagram of a light source and collimating lens integrated apparatus according to an embodiment of the present disclosure;
FIG. 2 is an enlarged schematic diagram of a heat-conductive member in FIG. 1 of the present disclosure;
FIG. 3 is a schematic structural diagram of a heat-conductive member according to an embodiment of the present disclosure; and
FIG. 4 is a partial schematic structural diagram of an illumination apparatus of a projection device according to an embodiment of the present disclosure.

### DETAILED DESCRIPTION

In order to make the objectives, technical solutions and advantages of the present disclosure clearer, the present disclosure will be further described in detail below in conjunction with the specific embodiments and with reference to the accompanying drawings. It should be understood that these descriptions are exemplary only, and are not intended to limit the scope of the present disclosure. In addition, in the following description, descriptions of well-known structures and technologies are omitted to avoid unnecessarily obscuring the concepts of the present disclosure.

The terms used in one or more embodiments of the present disclosure are for the purpose of illustrating the specific embodiments only, rather than limiting the one or more embodiments of the present disclosure. The terms "a", "said" and "the" of singular forms used in one or more embodiments of the present disclosure and the attached claims are also intended to include their plural forms, unless otherwise clearly specified in the context. It can also be appreciated that the term "and/or" as used herein refers to any or all possible combinations of one or more associated items as listed.

It can be appreciated that, while the terms "first", "second" and so on may be used herein to describe various information, such information is not limited to these terms, which are only used to distinguish between different information of the same category. For example, the first can also be referred to as the second, and similarly the second can also be referred to as the first, without departing from the scope of the one or more embodiments of the present disclosure. Depending on the context, the term "if" as used herein can be interpreted as "when", "while", or "in response to determining".

The present disclosure will be described in detail below with reference to the accompanying drawings and embodiments.

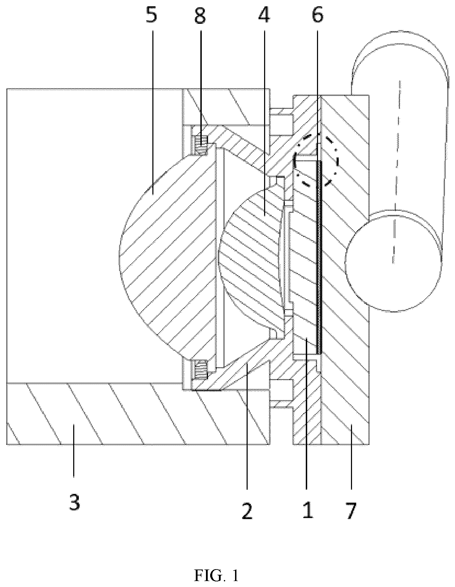

In some embodiments, as shown in FIGs. 1-4, the present disclosure provides a light source and collimating lens integrated apparatus, including a light source chip, a bracket, a first collimating lens, a second collimating lens and a housing.

The light source and collimating lens integrated apparatus includes:
a housing 3.
a bracket 2 disposed in the housing; the bracket having a cavity, and a first mounting part and a second mounting part being sequentially formed on an inner wall of the cavity, wherein the first mounting part and the second mounting part are coaxially disposed, and the first mounting part and the second mounting part are manufactured by a machining process to form revolving body-shaped outlines;
a first collimating lens 4 clamped to the first mounting part;
a second collimating lens 5 clamped to the second mounting part; and a light source chip 1 disposed at one end of the bracket, the light emitted by the light source chip 1 being output after passing through the first collimating lens and the second collimating lens. The number of the collimating lenses includes but is not limited to two, and the mounting parts on the bracket are correspondingly increased according to the increase in the number of the collimating lenses. The clamping connection means that the collimating lens is disposed in the mounting part of the bracket, and may be in one of clearance fit, over fit or interference fit with the mounting part.

Further, the bracket is assembled in the housing. Specifically, one end of the bracket having the second mounting part is disposed in the housing, and an outer wall of the bracket is fixedly connected with the inner wall of the housing to be assembled in the housing.

In some embodiments, the first mounting part and the second mounting part are both stepped holes and have stepped surfaces, and the stepped surfaces are formed by a machining process (such as a turning process). The collimating lenses are attached to the stepped surfaces after being assembled.

In some embodiments, a material for the bracket includes metal. In some embodiments, revolving body structures are formed inside the bracket 2, and the revolving body structures have the first mounting part and the second mounting part thereon. Specifically, the inner wall of the cavity of the bracket 2 is processed by the machining process, revolving features corresponding to the collimating lens 4 and the collimating lens 5 are formed respectively, the first mounting part (i.e., the stepped hole) is formed on the revolving feature of the collimating lens 4, and the second mounting part (i.e., the stepped hole) is formed on the revolving feature corresponding to the collimating lens 5. It can be understood that the mounting parts on the revolving features are the mounting holes, wherein the two mounting holes having stepped structures are generated coaxially in sequence by machining the bracket for mounting the collimating lenses. The machining way for the bracket in the present disclosure is different from the conventional injection molding process. In the present disclosure, the coaxiality and surface roughness of the mounting holes of the collimating lenses are improved by the machining process, so that the sizes of the mounting holes and the stepped surfaces meet design requirements, thereby effectively solving the problems about the coaxiality between the lenses and assembling and positioning of single lenses.

In some embodiments, the two mounting holes (the first mounting part and the second mounting part) which have different inner diameters and the stepped structures may be sequentially machined on the metal bracket by adopting the machining process, and revolving axes of these two mounting holes are coaxial with a rotation axis of a machine tool, thus ensuring the coaxiality and reducing the machining difficulty.

In the present disclosure, based on the sizes of the first collimating lens 4 and the second collimating lens 5, the bracket 2 is machined by the machining process to form the mounting holes corresponding to the collimating lenses, so that the hole-axis cooperation between the bracket 2 and the collimating lenses can be realized, that is, the axes of the mounting holes of the bracket 2 coincide with the axes of the collimating lenses, thereby effectively eliminating the accumulated assembling tolerance of the collimating lenses and improving the coaxiality between the collimating lenses. At the same time, under the condition of ensuring a mounting accuracy of the collimating lenses, the machining process can significantly reduce the manufacturing cost of the bracket 2 compared with the injection molding process.

In some embodiments, the outer wall of the bracket 2 is formed as the revolving body structures. Specifically, the outer wall of the bracket 2 is processed by the machining process to form the revolving body structures adaptive to the mounting holes of the housing; and the revolving body structures form hole-axis cooperation with the mounting holes of the housing 3, that is, the axis of the bracket 2 coincides with the axes of the mounting holes of the housing 3, thereby improving the assembling accuracy of the bracket 2 on the housing 3. Furthermore, the housing is made of a metal material. The metal material is not only suitable for machining, but also can be used as thermal dissipating structures of the collimating lenses with better thermal conductivity per se, thereby reducing the temperature variation of the collimating lenses in a working state and effectively reducing the problem of thermal defocusing. Specifically, both the mounting holes and the outline of the bracket can be manufactured by the machining process, so that the assembling accuracy between the mounting holes and the bracket is improved.

In some embodiments, the light source and collimating lens integrated apparatus further includes a heat-conductive member and a heat-dissipating member. The heat-dissipating member is disposed on one side of a substrate of the light source chip 1, that is, one end of the bracket away from the second mounting part; the heat-dissipating member is configured to dissipate heat of the bracket and the light source chip 1; and the heat-conductive member is disposed in a gap between the heat-dissipating member and the light source chip 1. The heat-dissipating member is configured to conduct the heat on the bracket to the outside, which reduces the defocusing problem of the collimating lenses.

In some embodiments, the bracket is made of a metal material, and one side of the bracket is attached to the heat-dissipating member. On one hand, the selected metal material is convenient for the machining of the bracket, and on the other hand, facilitates to improving a thermal dissipating effect of the bracket and effectively reducing the temperature of the collimating lenses.

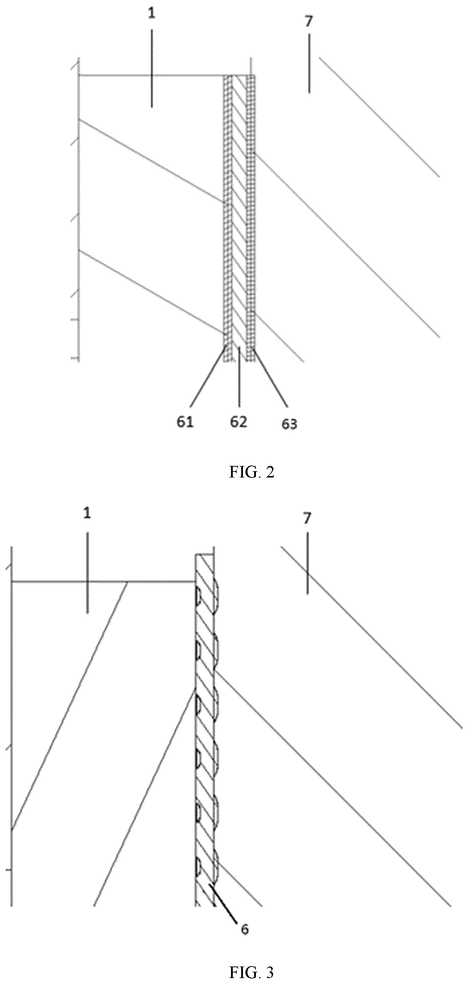

In some embodiments, as shown in FIG. 2 below, which is an enlarged schematic diagram of the heat-conductive member 6 of FIG. 1, the heat-conductive member includes a first heat-conductive layer 61, a second heat-conductive layer 63 and a third heat-conductive layer 62 disposed between the first heat-conductive layer and the second heat-conductive layer. The first heat-conductive layer 61 is disposed between the substrate of the light source chip 1 and the third heat-conductive layer 62, and the second heat-conductive layer 63 is disposed between the third heat-conductive layer 62 and the heat-dissipating member 7. A material for the first heat-conductive layer and the second heat-conductive layer includes heat-conductive silica gel or heat-conductive silicone grease, and a material for the third heat-conductive layer includes a metal material. The first heat-conductive layer is configured to fill an air gap between the third heat-conductive layer 62 and the substrate of the light source chip 1, and the second heat-conductive layer 63 is configured to fill an air gap between the third heat-conductive layer 62 and the heat-dissipating member 7.

In some embodiments, a material for the first heat-conductive layer 61 and the second heat-conductive layer 63 is the heat-conductive silica gel or heat-conductive silicone grease, and the material for the third heat-conductive layer 62 is metal. Preferably, the third heat-conductive layer 62 is copper foil.

In some embodiments, based on the condition that the air gap between the substrate of the light source chip and the heat-dissipating member 7 is 0.3mm, one first heat-conductive layer 61 of 0.1mm is coated on the substrate of the light source chip 1, one second heat-conductive layer 63 of 0.1mm is coated on the heat-dissipating member 7, and then one third heat-conductive layer 62 (such as copper foil) of 0.2mm is assembled between the first heat-conductive layer 61 and the second heat-conductive layer 63.

In some embodiments, on one hand, the material for the third heat-conductive layer 62 is copper, and a heat-conductive coefficient of the copper is much higher than that of the heat-conductive silicone grease or heat-conductive silica gel, so when the copper foil is introduced into the heat-conductive member, compared with the heat-conductive member made of pure heat-conductive silica gel or silicone grease, a thermal resistance of the heat-conductive member can be significantly reduced, and the thermal conductivity is improved, so that the heat generated by the light source is more easily conducted to the heat-dissipating member through the heat-conductive member, thereby improving the thermal dissipating efficiency.

On the other hand, based on the introduced copper foil, the thermal conductivity of the heat-conductive member is improved, and the first heat-conductive layer and the second heat-conductive layer in the present disclosure may adopt coatings of a smaller thickness. Due to the reduced coating thickness, the coating uniformity is easier to control, the proportion of a material with high heat-conductive coefficient in the heat-conductive member is increased, and the attaching effect and heat-conductive effect of the heat-conductive member 6 with the substrate of the light source chip 1 and the heat-dissipating member 7 are effectively ensured.

In some embodiments, the heat-conductive member 6 is the copper foil. The heat-conductive coefficient of the copper is much higher than that of the heat-conductive silicone grease or heat-conductive silica gel. In the present disclosure, the copper foil is used as the heat-conductive member. Compared with the traditional heat-conductive member made of the heat-conductive silicone grease or silicone grease, the thermal resistance of the heat-conductive member can be significantly reduced, and the thermal conductivity is improved, so that the heat generated by the light source is more easily conducted to the heat-dissipating member through the heat-conductive member, thereby improving the thermal dissipating efficiency.

In some embodiments, as shown in FIG. 3, the heat-conductive member 6 is the copper foil; protrusion structures are formed on the surface of the heat-conductive member; or protrusion structures are formed on the surface of the third heat-conductive layer. In the present disclosure, based on the characteristic of high heat-conductive coefficient of the copper foil, the thickness of the heat-conductive member can be made smaller (compared with the heat-conductive silicone grease or silica gel), so that the gap between the substrate of the light source chip 1 and the heat heat-dissipating member 7 is as small as possible and the high thermal conductivity is maintained. In addition, the protrusion structures are formed on the surface of the heat-conductive member, so that the areas of contact surfaces between the copper foil in the heat-conductive member and the light source chip 1 as well as the heat-dissipating member are increased, and elastic deformations of the protrusion structures provide sufficient deformation restoring forces, so that the copper foil is tightly abutted against the corresponding contact surfaces, the thermal resistance of the heat-conductive member becomes lower and the heat-conductive effect is further improved.

In some embodiments, after the heat-conductive member with the protrusion structures on at least one surface is mounted, the heat-conductive silicone grease or silica gel may be further coated on both sides of the heat-conductive member to enhance the attaching effect and reduce the interfacial thermal resistance. Due to the protrusion structures, the heat-conductive member has an undulating surface structure. Due to such an arrangement way, the use level of the heat-conductive member is increased. That is, when the heat-conductive member is disposed between the first heat-conductive member layer and the second heat-conductive member layer, the mass and volume ratio of the third heat-conductive member in the total heat-conductive member are increased, and the thermal dissipating effect is further enhanced. The protrusion structures are directly abutted against the corresponding contact surfaces, so that the areas of the contact surfaces between the copper foil in the heat-conductive member and the light source chip 1 as well as the heat-dissipating member are increased, while the first heat-conductive layer and the second heat-conductive layer are only filled in the gaps of the attaching surfaces, thus effectively improving the heat-conductive effect.

In some embodiments, the light source and collimating lens integrated apparatus further includes a fixing member. The fixing member is configured to fix the second collimating lens to the second mounting part, that is, the second collimating lens is fixed through the fixing member and the second mounting part.

In some embodiments, the fixing member is a pressing plate, wherein threads are formed on the fixing member, the second mounting part has threads corresponding to the pressing plate thereon, the second collimating lens is fixed by the threaded connection between the pressing plate and the second mounting part, and an assembly composed of the whole bracket, the collimating lenses and the light source chip 1 is assembled into the housing. In some optional embodiments, an adhesive may be coated on the stepped surfaces to fix the collimating lenses by bonding.

Specifically, the second mounting part includes the stepped surface, the planeness of the stepped surface is ensured by machining, and the size and planeness of the machined stepped structure are greatly improved compared with those of injection molding. With the cooperation of the stepped surface and the pressing plate, the collimating lenses are attached seamlessly in an axial direction of the bracket 2, thereby eliminating the problems of an axial gap and inclination of the collimating lenses and improving the optical coupling efficiency and luminous flux.

In some embodiments, the fixing member is a pressing plate, wherein the fixing member is connected with the second mounting part by glue (glue dispensing is performed at the joint between the pressing plate and the second mounting part), to fix the second collimating lens, and the assembly consisting of the whole bracket, the collimating lenses and the light source chip 1 is assembled into the housing.

In some embodiments, the heat-dissipating member is a copper plate.

Specifically, as shown in FIG. 1, in some embodiments provided by the present disclosure, the light source and collimating lens integrated apparatus includes a substrate of a light source chip 1, a bracket 2, a housing 3, a first collimating lens 4, a second collimating lens 5, a heat-conductive member 6, a heat-dissipating member 7 and a pressing plate 8. The light source chip 1, the first collimating lens 4 and the second collimating lens 5 are mounted on the bracket 2, thus realizing integrated assembling of the light source chip 1, the first collimating lens 4, the second collimating lens 5 and the bracket 2. The second collimating lens 5 is fixed by the pressing plate 8 and the second mounting part (stepped hole) of the bracket 2. Further, the pressing plate 8 is fastened by threads or glue dispensing, and the whole bracket 2 is assembled to the housing 3.

In the present disclosure, firstly, based on the sizes of the first collimating lens 4 and the second collimating lens 5, the bracket is processed by the machining process to form mounting holes corresponding to the collimating lenses, which can realize the hole-axis cooperation between the bracket and the collimating lenses. That is, the axes of the mounting holes of the bracket coincide with the axes of the collimating lenses, thereby effectively eliminating the accumulated assembling tolerance of the collimating lenses and improving the coaxiality between the collimating lenses.

Secondly, a material for the bracket is metal, the mounting holes can be machined in the bracket by the machining process, and the bracket, the collimating lenses and the housing 3 form the hole-axis cooperation, thus improving the coaxiality. In addition, compared with a die casting or CNC process, the metal bracket 2 can be machined by a turning process to form the mounting holes adaptive to the collimating lenses, thereby effectively ensuring the assembling coaxiality of the collimating lenses. In addition, compared with the CNC machining, the turning process can significantly reduce the manufacturing cost.

Thirdly, through the cooperation between the stepped surface of the metal bracket and the pressing plate 8, the collimating lenses are attached seamlessly in an axial direction, so that the problems of the axial gap and inclination of the collimating lenses are eliminated, and the optical coupling efficiency and luminous flux are improved.

Fourthly, due to high power of a light source, the long-term irradiation of the collimating lenses by the light source will lead to deformation of the collimating lenses due to temperature rise. When the heat of the collimating lenses cannot be effectively transferred out, serious deformation of the collimating lenses will be caused and the collimating effect is affected. In some embodiments of the present disclosure, the collimating lenses are connected with the metal bracket 2, and the bracket is connected with the heat-dissipating member, so that part of the heat of the collimating lenses is taken away by the heat-dissipating member, and the problem of thermal defocusing of the collimating lenses caused by thermal deformation is effectively reduced.

According to a second aspect of the present disclosure, the present disclosure provides an illumination apparatus, including the above light source and collimating lens integrated apparatus.

According to a third aspect of the present disclosure, the present disclosure provides a projection device, including the above illumination apparatus.

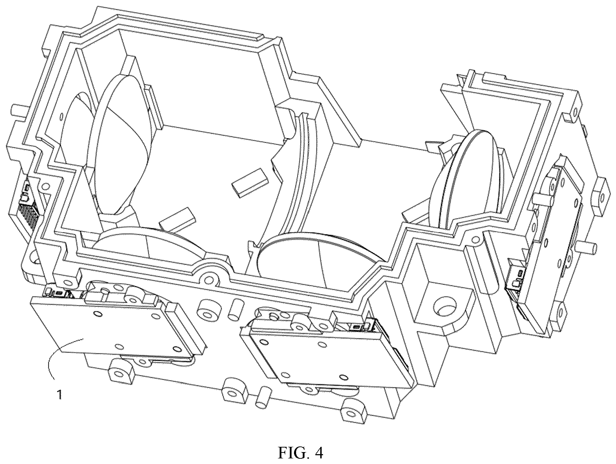

Referring to FIG. 4, the overall structure in FIG. 4 is an illumination apparatus part of the projection device. The illumination apparatus includes an LED light source and a collimating lens group (including the light source and collimating lens integrated apparatus). A component shown in FIG. 4 is the substrate of the light source chip 1, which is connected with the heat-dissipating member 7. The substrate is specifically an LED copper substrate.

It should be understood that the above specific embodiments of the present disclosure are only for exemplary illustration or explanation of the principles of the present disclosure, and do not constitute a limitation thereof. Therefore, any modifications, equivalent replacements, improvements, etc. made without departing from the spirit and scope of the present disclosure shall be included in the scope of protection of the present disclosure. Furthermore, the appended claims of the present disclosure are intended to cover all variations and modification examples falling within the scope and boundaries of the appended claims, or equivalent forms of such scope and boundaries.

The above disclosed preferred embodiments of the present disclosure are intended only to aid in the exposition of the application. The optional embodiments are not an exhaustive recitation of all details, nor do they limit the application to specific embodiments only. Obviously, many modifications and variations may be made according to the contents of the present disclosure. These embodiments are selected and specifically described in the present disclosure in order to better explain the principles and practical applications of the present disclosure, so that those skilled in the art can well understand and utilize the present disclosure. The present disclosure is limited only by the claims and their entire scope and equivalents.

## Claims

1. A light source and collimating lens integrated apparatus, comprising:
a housing;
a bracket disposed in the housing, the bracket having a cavity, and a first mounting part and a second mounting part being sequentially formed on an inner wall of the cavity, wherein the first mounting part and the second mounting part are coaxially disposed, and the first mounting part and the second mounting part are manufactured by a machining process to form revolving body-shaped outlines;
a first collimating lens clamped to the first mounting part;
a second collimating lens clamped to the second mounting part; and
a light source chip disposed at one end of the bracket, light emitted by the light source chip being output after passing through the first collimating lens and the second collimating lens.

2. The apparatus according to claim 1, further comprising:
a heat-dissipating member disposed on a side of a substrate of the light source chip; the heat-dissipating member being configured to dissipate heat of the bracket and the light source chip; and
a heat-conductive member disposed in a gap between the heat-dissipating member and the light source chip.

3. The apparatus according to claim 2, wherein
the bracket is made of a metal material, and a side of the bracket is attached to the heat-dissipating member.

4. The apparatus according to claim 2, wherein
the heat-conductive member comprises a first heat-conductive layer, a second heat-conductive layer and a third heat-conductive layer disposed between the first heat-conductive layer and the second heat-conductive layer;
the first heat-conductive layer is disposed between the substrate of the light source chip and the third heat-conductive layer, the second heat-conductive layer is disposed between the third heat-conductive layer and the heat-dissipating member, materials of the first heat-conductive layer and the second heat-conductive layer comprise heat-conductive silica gel or heat-conductive silicone grease, and a material of the third heat-conductive layer comprises a metal material.

5. The apparatus according to claim 2 or 4, wherein
the heat-conductive member is copper foil, and protrusion structures are formed on a surface of the heat-conductive member; or protrusion structures are formed on a surface of the third heat-conductive layer.

6. The apparatus according to claim 1, further comprising:
a fixing member for fixing the second collimating lens to the second mounting part.

7. The apparatus according to claim 6, wherein
the fixing member is a pressing plate, and threads are formed on the fixing member, wherein the second mounting part has threads corresponding to the threads of the pressing plate, and the second collimating lens is fixed through threaded connection between the pressing plate and the second mounting part.

8. The apparatus according to claim 6, wherein
the fixing member is a pressing plate, and the second collimating lens is fixed through glue connection between the fixing member and the second mounting part.

9. The apparatus according to claim 1, wherein
the housing is made of a metal material, and the housing is provided with mounting holes matched with the bracket for assembling, wherein the mounting holes and an outer outline of the bracket are manufactured by the machining process.

10. An illumination apparatus comprising the light source and collimating lens integrated apparatus according to any of claims 1 to 9.

11. A projection device comprising the illumination apparatus according to claim 10.
